# EUROPÄISCHE PATENTSCHRIFT

(11) **EP 0 340 583 B1**
(45) Veröffentlichungstag und Bekanntmachung des Hinweises auf die Patenterteilung: **28.07.1993**
(21) Anmeldenummer: 89107346.2
(22) Anmeldetag: 24.04.1989
(51) Int. Cl.: B01F 17/00, D21H 19/44, C09D 17/00

(54) **Wässrige Dispersionen mit einer synergistischen Dispergiermittelkombination**
Aqueous dispersions with a synergistic combination of dispersing agents
Dispersions aqueuses avec des combinaisons synergistiques d'agents de dispersions

(30) Priorität: 05.05.1988 DE 3815239
(43) Veröffentlichungstag der Anmeldung: 08.11.1989
(73) Patentinhaber: BAYER AG, 51368 Leverkusen (DE); GEBRÜDER BORCHERS AKTIENGESELLSCHAFT, 38642 Goslar (DE)
(72) Erfinder: Mazanek, Jan, Dr., D-5000 Köln 80 (DE); Gizycki von, Ulrich, Dr., D-5090 Leverkusen 3 (DE); Link, Günter, D-3380 Goslar 1 (DE)

(56) Entgegenhaltungen:
- EP-A- 0 034 771
- EP-A- 0 097 291
- EP-A- 0 260 945
- EP-A- 0 325 852
- DE-A- 1 519 254
- DE-A- 1 769 010
- FR-A- 2 258 438
- FR-A- 2 472 595
- GB-A- 2 019 822
- US-A- 3 156 574
- US-A- 4 056 402

## Beschreibung

Die vorliegende Erfindung betrifft wäßrige Dispersionen von Füllstoffen und/oder Pigmenten, die eine synergistische Dispergiermittelkombination enthalten.

Wäßrige Dispersionen von Füllstoffen und/oder Pigmenten, die z.B. als Papierstreichfarben verwendet werden können, besitzen im allgemeinen einen Feststoffgehalt im Bereich von 30 bis 85 Gew.-%. Die eingesetzten Dispergiermittel sollen im wesentlichen der Dispersion bei dem gewünschten Feststoffgehalt geeignete rheologische Eigenschaften verleihen. Die Dispergiermittel sollen außerdem die Benetzung der zu dispergierenden Stoffe verbessern, beim Dispergiervorgang die Desagglomeration erleichtern und die fertige Dispersion gegen Agglomeration und Sedimentation stabilisieren.

Für diese Zwecke sind organische und anorganische Dispergiermittel bekannt. Als anorganische Dispergiermittel werden z.B. Phosphate und Polyphosphate, wie Natriumhexametaphosphat, eingesetzt. Sie zeigen eine gute Dispergierwirkung, haben aber den Nachteil, daß sie nicht hydrolysestabil sind. Dies bedeutet, daß solche Dispersionen bei längerer Lagerung sich in unerwünschter Weise verdicken.

Als organische Dispergiermittel werden z.B. Polymere und Copolymere der Methacryl- und Acrylsäure mit niedrigem bis mittlerem Molekulargewicht eingesetzt. So beschreibt die DE-A-2 700 444 die Verwendung von Copolymeren mit Maleinsäurederivaten, die JP-A-57/095 396 die Verwendung von Copolymeren der Acrylsäure und der Styrolsulfonsäure, die JP-A-56/115 630 die Verwendung von Copolymeren mit ungesättigten Sulfonsäuren und die DE-A-3 101 939 die Verwendung phosphorhaltiger Polyacrylsäure-Copolymerer. Die Verwendung sulfonierter Polyesterharze wird in der SU-A-861 377 und die von Derivaten von Styrol/Maleinsäureanhydrid-Copolymeren in der SU-A-903 438 beschrieben. Der Einsatz niedermolekularer nichtionischer Tenside ist in der BE-A-741 374 beschrieben.

Die GB-A-2 019 822 beschreibt Talkum enthaltende wäßrige Dispersionen, die Polyacrylsäure und Dialkylsulfosuccinate als Dispergiermittel enthalten. Das ist nicht die erfindungsgemäße Kombination.

Die US-A-4 056 402 beschreibt in Wasser dispergierbare Pigmentkompositionen, die außerdem Pigment 15 - 45 % nichtionische Dispergiermittel und 10 bis 67 % eines wasserlöslichen Celluloseethers enthalten. Auch das ist keine erfindungsgemäße Kombination.

Die Wirksamkeit bekannter Dispergiermittel reicht aber in vielen Fällen nicht aus, um Dispersionen mit optimalen rheologischen Eigenschaften zu erhalten. Ist die Viskosität solcher Dispersionen zu hoch, so muß der Feststoffgehalt herabgesetzt werden, um technisch brauchbare Dispersionen, z.B. Streichfarben, zu erhalten. Dies hat aber eine Verschlechterung der Qualität dieser Streichfarben zur Folge, insbesondere bezüglich ihrer Farbstärke, Deckkraft und/oder Filmbildung.

Es besteht also noch ein Bedürfnis nach wäßrigen Dispersionen von Füllstoffen und/oder Pigmenten mit verbesserten Eigenschaften.

Es wurden nun wäßrige Dispersionen von Füllstoffen und/oder Pigmenten gefunden, die dadurch gekennzeichnet sind, daß sie eine Dispergiermittelkombination folgender Zusammensetzung enthalten:
A + B + C + D oder
A + B + D oder
A + C + D oder
A + D
in welcher
A) 40 bis 90 Gew.-% eines wasserlöslichen Polymers,
B) 0 bis 60 Gew.-% eines nichtionischen Alkylenoxidadduktes mit einem mittleren Molekulargewicht von 200 bis 100.000 kg/kgmol,
c) 0 bis 60 Gew.-% Verbindungen der Formeln (I), (II) und/oder (III) 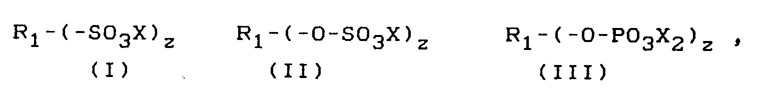 in denen
   - R₁: für einen gegebenenfalls substituierten aliphatischen, aromatischen oder araliphatischen Rest mit 1 bis 50 C-Atomen,
   - z: jeweils unabhängig voneinander für eine ganze Zahl von 1 bis 10 und
   - X: für Wasserstoff, ein einwertiges Metallion oder ein gegebenenfalls substituiertes Ammoniumion stehen und
D) 10 bis 60 Gew.-%, einer Verbindung der Formel (IV) 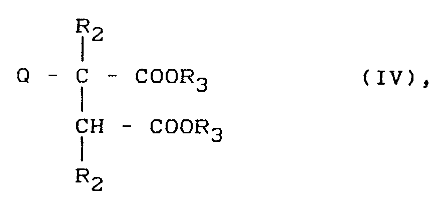 in der
   Q für Wasserstoff, 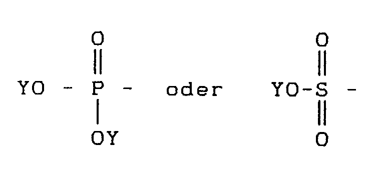
   - Y: jeweils unabhängig voneinander für Wasserstoff, ein einwertiges Metallion oder ein gegebenenfalls substituiertes Ammoniumion,
   - R₂: jeweils unabhängig voneinander für Wasserstoff, einen gegebenenfalls substituierten Alkylrest mit 1 bis 12 C-Atomen oder für einen Rest des Typs -CH₂-COOR₃ oder -CH₂-OH₂-COOR₃ und
   - R₃: jeweils unabhängig voneinander für Wasserstoff, Y oder einen gegebenenfalls substituierten Alkylrest mit 1 bis 25 C-Atomen stehen,
   bedeuten,

wobei die Summe der jeweiligen Kombination 100 Gew.-% ergibt.

Die Komponente A) liegt vorzugsweise zu 50 bis 90, insbesondere 60 bis 80, Gew.-% vor. Die Komponente B) liegt vorzugsweise zu 10 bis 40, insbesondere 20 bis 30, Gew.-% vor. Die Komponenten C) und D) liegen vorzugsweise unabhängig voneinander jeweils zu 10 bis 30 Gew.-% vor.

Als wasserlösliche Polymere (= Komponente A)) kommen beispielsweise beliebige wasserlösliche Homo- und Copolymere in Frage, bei denen es sich auch um gegebenenfalls modifizierte Naturprodukte (z.B. Salze mit einwertigen Kationen) handeln kann. Geeignet sind z.B. Cellulosederivate wie Carboxymethylcellulose, sulfonierte Polyester und Hydrolysate von Polyacrylnitril. Bevorzugt sind Homo- und Copolymere von Methacryl- und/oder Acrylsäure und deren Salze, insbesondere solche mit Molekulargewichten im Bereich von 800 bis 40.000 kg/kmol, speziell 1.000 bis 20.000 kg/kmol, in Form der Natrium-, Kalium- oder gegebenenfalls substituierte Ammoniumsalze.

Als nichtionische Alkylenoxidaddukte (= Komponente B)) kommen mono-, di- und polyfunktionelle Spezies in Frage. Beispielsweise kann es sich um Umsetzungsprodukte von Alkylenoxiden mit beliebigen, aktiven Wasserstoff enthaltenden Verbindungen handeln. Die Alkylenoxide können beispielsweise 2 bis 40, vorzugsweise 2 oder 3 C-Atome enthalten. Die aktiven Wasserstoff enthaltenden Verbinduingen können beispielsweise mono-, di- oder polyfunktionelle, gegebenenfalls substituierte Phenole, Alkohole Thioalkohole oder Amine sein. Umsetzungsprodukte von Alkylenoxiden mit α,ω-Aminopolyethern sind ebenfalls geeignet, beispielsweise solche mit einem mittleren Molekulargewicht von 200 bis 100.000 kg/kmol, bevorzugt von 400 bis 60.000 kg/kmol.

Eine besondere Gruppe von Verbindungen, die als Komponente B) geeignet sind, entsprechen der Formel (V) 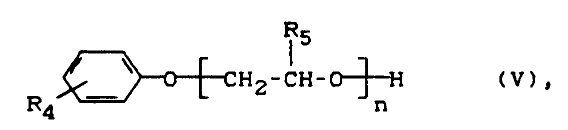
in der
- R₄: einen gegebenenfalls substituierten aliphatischen, aromatischen oder araliphatischen Rest mit 1 bis 40 Kohlenstoffatomen,
- R₅: Wasserstoff, Phenyl oder einen Alkylrest mit 1 bis 12 C-Atomen und
- n: eine Zahl von 2 bis 300
bedeutet. n bedeutet bevorzugt 4 bis 100.

Eine weitere besondere Gruppe von Verbindungen, die als Komponente B) geeignet sind, entsprechen der Formel (VI) 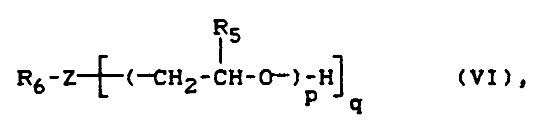
in der
- R₅: die bei Formel (V) angegebene Bedeutung hat,
- R₆: für einen gegebenenfalls substituierten aliphatischen Rest mit 2 bis 12 C-Atomen,
- Z: Sauerstoff, Schwefel oder Stickstoff und
- p: eine Zahl von 2 bis 300 bedeuten und
- q: für 1 steht, wenn Z für Sauerstoff oder Schwefel steht und q für 2 steht, wenn Z für Stickstoff steht.

Vorzugsweise bedeutet p eine Zahl im Bereich 4 bis 100.

Eine dritte besondere Gruppe von Verbindungen, die als Komponente B) geeignet sind, sind Additionsverbindungen von Ethylen- und/oder Propylenoxid an Polyamin- und/oder Polyhydroxylverbindungen mit einem mittleren Molekulargewicht im Bereich von 42 bis 100.000 kg/kmol, bevorzugt mit einem mittleren Molekulargewicht von 150 bis 40.000 kg/kmol.

Als sulfongruppenhaltige Verbindungen (= Komponente C), Formel (I)) kommen beispielsweise aliphatische, aromatische und araliphatische, gegebenenfalls substituierte Sulfonsäuren und deren Salze, insbesondere Alkylbenzolsulfonsäuren, Naphthalinsulfonsäuren, kondensierte Naphthalinsulfonsäuren, sulfonierte Oligo- und Polymere (z.B. von Styrol), Umsetzungsprodukte von Sulfanilsäure mit Polymeren (z.B. mit Maleinsäureanhydrid-Copolymeren), Sulfobernsteinsäure und Sulfobernsteinsäureester in Frage.

Als Sulfat- und Phosphatgruppen enthaltende Verbindungen (= Komponente C), Formeln (II) und (III)) kommen z.B. Umsetzungsprodukte von Thionylchlorid oder Phosphonylchlorid mit Alkoholen (z.B. Dodecylsulfat) in Frage. Bevorzugt sind Sulfate und Phosphate der oben beschriebenen nichtionischen Alkylenoxidaddukte.

Eine besondere Gruppe von Verbindungen, die als Komponente D) geeignet sind, sind solche der Formel (VII) 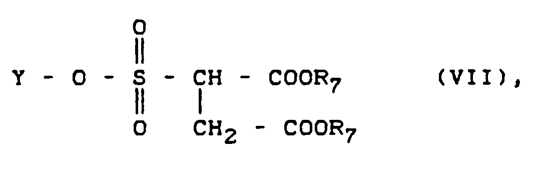
in der
- Y: die bei Formel (IV) angegebene Bedeutung hat und
- R₇: unabhängig voneinander jeweils für einen gegebenenfalls substituierten Alkylrest mit 1 bis 25 C-Atomen, Wasserstoff, ein einwertiges Metallion oder ein gegebenenfalls substituiertes Ammoniumion steht.

R₇ steht vorzugsweise für einen gegebenenfalls substituierten Alkylrest mit 8 bis 22 C-Atomen.

Eine andere Gruppe von Verbindungen, die als Komponente D) in Frage kommen, sind beispielsweise solche der Formel (VIII) 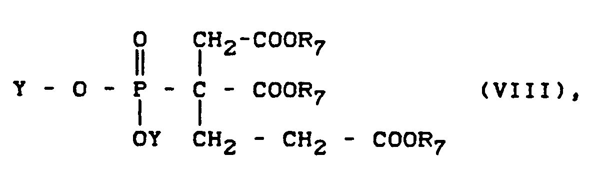
in der
- R₇: die bei Formel (VII) angegebene Bedeutung und
- Y: die bei Formel (IV) angegebene Bedeutung haben.

R₇ steht in Formel (VIII) vorzugsweise für Wasserstoff, ein einwertiges Metallion oder ein gegebenenfalls substituiertes Ammoniumion.

Erfindungsgemäße wäßrige Dispersionen können beispielsweise die Dispergiermittelkombination in Mengen von 0,02 bis 10 Gew.-% (bezogen auf die in der Dispersion vorhandenen Feststoffe) enthalten. Vorzugsweise liegt diese Menge im Bereich 0,05 bis 5 Gew.-%, besonders bevorzugt im Bereich 0,1 bis 1 Gew.-%.

Die erfindungsgemäßen, mehrere Dispergiermittel enthaltenden Dispersionen, zeichnen sich durch verbesserte Fließeigenschaften aus, insbesondere im Vergleich zu Dispersionen, die nur ein einziges Dispergiermittel enthalten. Dies bedeutet: Die erfindungsgemäße Additivkombination zeigt einen überraschenden synergistischen Effekt.

Die Auswahl der Komponenten B), C) und/oder D) kann nach an sich bekannten Verfahren erfolgen, z.B. aufgrund von Viskositätsmessungen an Dispersionen. Das Verhältnis der Komponenten A) bis D) untereinander kann bei unterschiedlichen Füllstoff- und/oder Pigment-Zusammensetzungen variieren Die Wirksamkeit erfindungsgemäßer Dispergiermittelkombinationen kann gegebenenfalls durch Variieren der Mengenverhältnisse der Einzelkomponenten untereinander optimiert werden, um so Dispersionen mit bestmöglichen Fließeigenschaften zu erhalten. Das jeweils optimale Verhältnis der Komponenten kann in einfacher Weise durch wenige Screening-Versuche ermittelt werden (siehe Beispiele).

Als Füllstoffe und Pigmente kommen beliebige organische oder anorganische Feststoffe in Frage, beispielsweise Calciumcarbonat, Silicate (wie Talkum, Kaolin oder Glimmer), Siliciumdioxid, Glaskugeln, Aluminiumtitanat, Siliciumcarbid, Siliciumnitrid, sonstige Pulver für die Keramikherstellung, Zinkoxid, Titandioxid, Eisenoxide, organische Pigmente (wie γ-Chinacridon oder Cu-Phthalocyanin), Metalloxide, Metallpulver, Metallfasern, Aluminiumoxid, Al(OH)₃, Ruß, Graphit, Kohle, Gesteinsmehl, Molybdänsulfid und Calciumsulfat. Erfindungsgemäße Dispersionen können beispielsweise 5 bis 95 Gew.-% Feststoffe enthalten. Vorzugsweise liegt der Feststoffgehalt zwischen 15 und 80 Gew.-%, besonders bevorzugt zwischen 30 und 70 Gew.-%.

Die Herstellung erfindungsgemäßer Dispersionen kann auf an sich bekannte Weise erfolgen. Beispielsweise kann man die nach Vortests ausgewählte Dispergiermittelkombination in Wasser lösen und dann die zu dispergierenden Stoffe unter Rühren zugeben. Man kann die Dispergiermittelkombination, Wasser und die Feststoffe, auch in einer Mühle vermischen und gemeinsam vermahlen. Bevorzugt werden die Feststoffe zuerst mit der Dispergiermittelkomponente A) vordispergiert und danach die sonstigen Dispergiermittelkomponenten und gegebenenfalls weiteres Wasser zugegeben. So erhält man im allgemeinen Dispersionen mit besonders stark verbesserten Fließeigenschaften.

Der pH-Wert erfindungsgemäßer Dispersionen kann die Fließeigenschaften beeinflussen. Gegebenenfalls kann der jeweils optimale pH-Wert durch einfache Optimierungsversuche ermittelt werden. Er liegt im allgemeinen im Bereich zwischen pH 5 und pH 10.

Erfindungsgemäße Dispersionen können gegebenenfalls weitere übliche Zusätze enthalten, z.B. Bindemittel, Farbstoffe und/oder Entschäumer.

Die Beurteilung der erfindungsgemäßen Dispersionen, insbesondere von deren Fließeigenschaften, kann z.B. durch Viskositätsmessungen erfolgen. Screening-Tests werden vorteilhafterweise mit höher konzentrierten Dispersionen durchgeführt, als sie praktisch verwendet werden. Wie in den Beispielen gezeigt, hat dies den Vorteil, daß die Unterschiede in der Wirksamkeit einzelner Dispergiermittel oder Dispergiermittelkombinationen relativ gleich bleiben, absolut aber höhere Werte gemessen werden können.

Die nachfolgenden Beispiele erläutern die vorliegende Erfindung.

### Beispiele

### Beispiel 1

Zu einer Lösung aus 1,2 g (= 0,2 Gew.-%, bezogen auf Feststoff) eines niedermolekularen Natriumpolyacrylats mit einem mittleren Molekulargewicht von ca. 3500 in 1,8 g Wasser wurden zunächst 106 g Wasser und dann unter Rühren innerhalb von 15 Min. 340 g Calciumcarbonat (Stampfdichte: 1,2 g/ml, mittlerer Teilchendurchmesser: 3 µm), 20 g Talkum (Korngröße: 81 % unter 10 µm) und 240 g Titandioxid (Ölzahl: 19, Aufhellvermögen: 750, relatives Streuvermögen: 112, Dichte: 4,1) zugegeben. Der pH-Wert der Dispersion wurde mit 10 %iger NaOH-Lösung bei pH 8,6 konstant gehalten. Nach 60 Min. Rühren wurden nacheinander 1 g Wasser, 0,3 g eines Nonylphenol/10 EO-Ethoxilats und 0,75 g einer 40 %igen wäßrigen Lösung einer Verbindung der Formel (VIII) mit allen R₇ und allen Y = Natrium zugegeben. Die erhaltene Dispersion wurde weiter gerührt und ihre Viskosität nach 10 Min. und nach 24 Std. mit einem Haake-Viskosimeter RV 100, Meßkörper MV P II gemessen. Bei 23° C und 440 S⁻¹ wurde nach 10 Min. eine Viskosität von 460 mPa.s und nach 24 Std. eine Viskosität von 410 mPa.s gemessen.

### Vergleichsbeispiel A

Es wurde analog Beispiel 1 verfahren, jedoch wurde als Dispergiermittel statt 3,0 g nunmehr 4,5 g der Natriumpolyacrylatlösung (= 0,3 Gew.-% bezogen auf Feststoff, fest/ fest) und kein Nonylphenol/10 EO-Ethoxylat und keine Verbindung der Formel (VIII) eingesetzt. Die Viskosität der Dispersion betrug nach 10 Min. bei 23°C 590 mPa.s, nach 24 Std. 620 mPa.s. Bei der Verwendung von 3 g der Natriumpolyacrylatlösung (= 0,2 Gew.-%) wurde nach 10 Min. eine Viskosität von 680 mPa.s, nach 24 Std. eine Viskosität von 650 mPa.s gemessen.

### Beispiel 2

Es wurde wie in Beispiel 1 beschrieben verfahren, jedoch wurde anstelle des Gemisches Nonylphenol/10 EO-Ethoxylat mit der Verbindung der Formel (VIII) nur 0,6 g Nonylphenyl/10 EO-Addukt eingesetzt. Bei 23°C wurde nach 10 Min. eine Viskosität von 520 mPa.s und nach 24 Std. eine Viskosität von 570 mPa.s gemessen.

### Beispiel 3

Es wurde wie in Beispiel 2 beschrieben verfahren, jedoch wurden anstelle des Nonylphenol/10 EO-Addukts 1,5 g einer 40 %igen Lösung einer Verbindung der Formel (VIII) mit allen R₇ = allen Y = Natrium zugegeben. Nach 10 Min. wurde eine Viskosität von 530 mPa.s und nach 24 Std. eine Viskosität von 480 mPa.s gemessen, jeweils bei 23°C.

### Beispiel 4

Es wurde wie in Beispiel 1 beschrieben verfahren, jedoch wurde Talkum mit einer Korngröße von 98 % unter 10 µm eingesetzt, bei einem pH-Wert von 8,8 gearbeitet und das Mengenverhältnis von Nonylphenol/10 EO-Ethoxilat zu Verbindung der Formel (VIII) variiert. Tabelle 1 zeigt die Viskositätsmessungen an der Dispersion, die nach 24 Std. und bei 23°C vorgenommen wurden.

**Tabelle 1**

| Gewichtsverhältnis von Nonylphenol/10 EO-Ethoxilat zu Verbindung der Formel (VIII) | gemessene Viskosität (mPa.s) |
|---|---|
| a) 3:7 | 630 |
| b) 7:3 | 480 |
| c) 8:2 | 390 |

Die Menge Nonylphenol/10 EO-Ethoxilat + Verbindung der Formel (VIII) betrug in allen Fällen 0,1 Gew.-% bezogen auf Feststoff, fest/fest.

### Vergleichsbeispiel B

Es wurde verfahren wie in Beispiel 4 beschrieben, jedoch wurden nur 3,0 g der Natriumpolyacrylatlösung (= 0,2 Gew.-% bezogen auf Feststoff, fest/fest) und kein Nonylphenol/10 EO-Ethoxylat und keine Verbindung der Formel (VIII) eingesetzt. Bei 23°C wurde eine Viskosität von 780 mPa.s gemessen.

Ein entsprechender Versuch mit 4,5 g Natriumpolyacrylatlösung (= 0,3 Gew.-% bezogen auf Feststoff, fest/fest) ergab eine Dispersion mit einer Viskosität von 770 mPa.s (bei 23°C).

### Beispiel 5

Es wurde verfahren wie in Beispiel 4 c) beschrieben, jedoch wurden zunächst alle Dispergiermittelkomponenten mit Wasser vermischt und erst danach die Feststoffe zugegeben. Es wurde eine Dispersion mit einer Viskosität von 480 mPa.s erhalten (bei 23°C).

### Beispiel 6 und Vergleichsbeispiele C und D

Es wurde wie in Beispiel 4 beschrieben verfahren, jedoch wurde bei einem pH-Wert von 8,6 gearbeitet und 240 g Titandioxid mit einer Ölzahl von 20, einem Aufhellvermögen von 700, einem relativen Streuvermögen von 105 und einer Dichte von 4,1 eingesetzt. Die nach jeweils 24 Std. bei 23°C gemessenen Viskositäten der erhaltenen Dispersionen sind aus Tabelle 2 ersichtlich.

**Tabelle 2**

| Beispiel Nr. | Konzentration des Napolyacrylats (Gew.-%) | Gewichtsverhältnis von Nonylphenol/10 EO-Ethoxilat zu Verbindung der Formel (VIII) | gemessene Viskosität (mPa.s) |
|---|---|---|---|
| 6a | 0,2 | 0:10 | 400 |
| 6b | 0.2 | 3:7 | 450 |
| 6c | 0.2 | 8:2 | 270 |
| 6d | 0.2 | 10:0 | 300 |
| Vergleichsbeispiel C | 0,2 | - | 600 |
| Vergleichsbeispiel D | 0,3 | - | 590 |

Die Menge Nonylphenol/10 EO-Ethoxilat + Verbindung der Formel (VIII) betrug in allen Fällen 0,1 Gew.-% bezogen auf Feststoff, fest/fest.

### Beispiel 7 und Vergleichsbeispiele E und F

Es wurde verfahren wie in Beispiel 4 beschrieben, jedoch wurde zusätzlich zu 0,2 Gew.-% Natriumpolyacrylat mit einem mittleren Molekulargewicht von ca. 3500 0,1 Gew.-% eines Gemisches aus Nonylphenol/10 EO-Ethoxilat und einem weiteren Additiv im Gewichtsverhältnis 7:3 (fest/fest) eingesetzt. Die jeweils nach 24 Std. bei 23°C gemessenen Viskositäten sind aus Tabelle 3 ersichtlich.

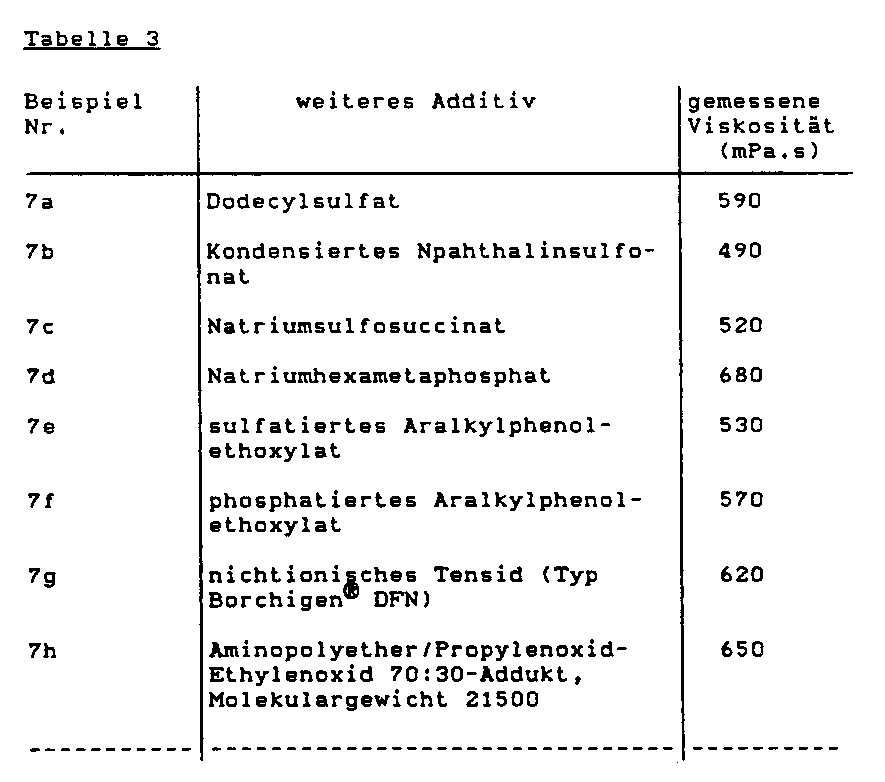

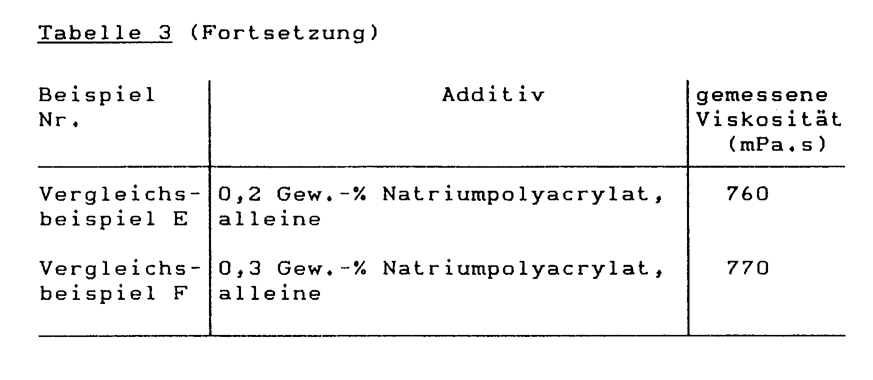

### Beispiel 8 und Vergleichsbeispiele G und H

Analog dem in Beispiel 1 beschriebenen Verfahren wurde bei einem pH-Wert von 9,0 eine Dispersion aus nachfolgenden Einzelkomponenten hergestellt:
129 g Wasser,
251 g Dolomit (Stampfdichte: 1,21 g/ml, Stampfvolumen: 83 ml/100 g),
140 g Calciumcarbonat (Stampfdichte: 1,2 g/ml, mittlerer Teilchendurchmesser: 3 µm),
48 g Schwerspat (Teilchengröße: 99 % unter 20 µm, Ölzahl: 11),
24 g Talkum (Korngröße: 90 % unter 10 µm),
145 g Titandioxid (identisch mit dem in Beispiel 1 verwendeten TiO₂),
3,1 g 40 %ige Natriumpolyacrylatlösung (mittleres Molekulargewicht 3500) und
0,61 g Additiv gemäß Tabelle 5 (bezogen auf fest/fest).

In den erhaltenen Dispersionen wurde jeweils nach 24 Std. Rühren bei 23°C die Viskosität bestimmt Das Ergebnis ist ebenfalls aus Tabelle 5 ersichtlich.

**Tabelle 4**

| Beispiel Nr. | Additiv Nonylphenol/10 EO-Ethoxilat und Verbindung der Formel (VIII) im Gewichtsverhältnis | gemessene Viskosität (mPa.s) |
|---|---|---|
| 8a | 3:7 | 420 |
| 8b | 5:5 | 390 |
| 8c | 6:4 | 320 |
| 8d | 8:2 | 400 |
| Vergleichsbeispiel G | 0,2 Gew.-% Natriumpolyacrylat, alleine | 470 |
| Vergleichsbeispiel H | 0,3 Gew.-% Natriumpolyacrylat, alleine | 480 |

### Beispiel 9 und Vergleichsbeispiele I und J

Analog dem in Beispiel 1 beschriebenen Verfahren wurde bei dem sich ohne Zusatz von NaOH-Lösung ergebenden pH-Wert eine Dispersion hergestellt aus
205,4 g Chromoxid-Pigment,
17,7 g Wasser,
1,0 g 40 %ige Natriumpolyacrylat-Lösung (analog Beispiel 1)
0,23 g Verbindung der Formel (VIII) (analog Beispiel 1)
0,10 g Nonylphenol/10 EO-Ethoxilat.

Die in der erhaltenen Dispersion nach 14 stündigem Rühren erhaltene Viskosität ist aus Tabelle 6 ersichtlich.

**Tabelle 5**

| Beispiel Nr. | Additive | gemessene Viskosität bei 23°C (mPa.s) |
|---|---|---|
| 9 | wie oben angegeben | 330 |
| Vergleichsbeispiel I | 2,5 g Natriumpolyacrylat (40 %ig) | 420 |
| Vergleichsbeispiel J | 3,75 g Natriumpolyacrylat (40 %ig) | 400 |

## Patentansprüche

1. Wäßrige Dispersionen von Füllstoffen und/oder Pigmenten, dadurch gekennzeichnet, daß sie eine Dispergiermittelkombination folgender Zusammensetzung enthalten:
A + B + C + D oder
A + B + D oder
A + C + D oder
A + D
in welcher
A) 40 bis 90 Gew.-% eines wasserlöslichen Polymers,
B) 0 bis 60 Gew.-% eines nichtionischen Alkylenoxidadduktes mit einem mittleren Molekulargewicht von 200 bis 100.000 kg/kmol,
C) 0 bis 60 Gew.-% Verbindungen der Formeln (I), (II) und/oder (III) 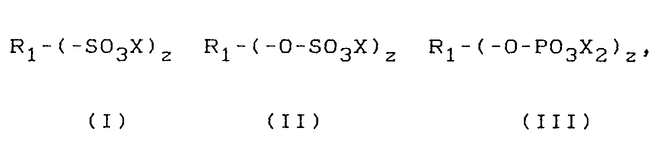 in denen
R₁ für einen gegebenenfalls substituierten aliphatischen, aromatischen oder araliphatischen Rest mit 1 bis 50 C-Atomen,
z jeweils unabhängig voneinander für eine ganze Zahl von 1 bis 10 und
X für Wasserstoff, ein einwertiges Metallion oder ein gegebenenfalls substituiertes Ammoniumion stehen und
D) 10 bis 60 Gew.-% einer Verbindung der Formel (IV) 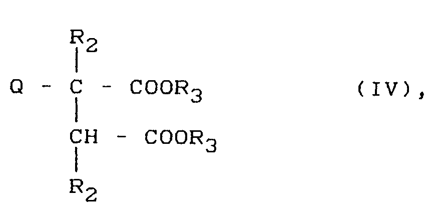 in der
Q für Wasserstoff, 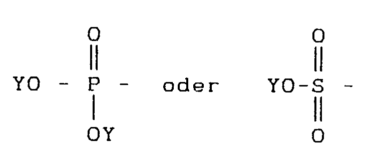 in der
Y jeweils unabhängig voneinander für Wasserstoff, ein einwertiges Metallion oder ein gegebenenfalls substituiertes Ammoniumion,
R₂ jeweils unabhängig voneinander für Wasserstoff, einen gegebenenfalls substituierten Alkylrest mit 1 bis 12 C-Atomen oder für einen Rest des Typs -CH₂-COOR₃ oder -CH₂-CH₂-COOR₃ und
R₃ jeweils unabhängig voneinander für Wasserstoff, Y oder einen gegebenenfalls substituierten Alkylrest mit 1 bis 25 C-Atomen stehen,
bedeuten,
wobei die Summe der jeweiligen Kombination 100 Gew.-% ergibt.

2. Wäßrige Dispersionen gemäß Anspruch 1, dadurch gekennzeichnet, daß die Komponente A) Homo- und Copolymere von Methacryl- und/oder Acrylsäure oder deren Salze mit Molekulargewichten im Bereich von 800 bis 40 000 kg/kmol sind.

3. Dispersionen nach Ansprüchen 1 und 2, dadurch gekennzeichnet, daß die Komponente B) Umsetzungsprodukte von Alkylenoxiden mit 2 bis 40 C-Atomen mit mono-, di- oder polyfunktionellen, gegebenenfalls substituierten Phenolen, Alkoholen, Thioalkoholen oder Aminen sind.

4. Dispersionen nach Ansprüchen 1 bis 3, dadurch gekennzeichnet, daß die Komponente B) eine Verbindung der Formel (V) ist 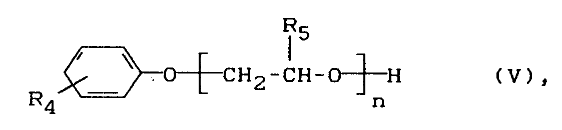 in der
R₄ einen gegebenenfalls substituierten aliphatischen, aromatischen oder araliphatischen Rest mit 1 bis 40 Kohlenstoffatomen,
R₅ Wasserstoff, Phenyl oder einen Alkylrest mit 1 bis 12 C-Atomen und
n eine Zahl von 2 bis 300
bedeutet.

5. Dispersionen nach Ansprüchen 1 bis 4, dadurch gekennzeichnet, daß die Komponente C) aliphatische, aromatische oder araliphatische, gegebenenfalls substituierte Sulfonsäure oder deren Salze oder Umsetzungsprodukte von Thionylchlorid oder Phosphonylchlorid mit Alkoholen sind.

6. Dispersionen nach Ansprüchen 1 bis 5, dadurch gekennzeichnet, daß die Dispersion die Dispergiermittelkombination in einer Menge von 0,02 bis 10 Gew.-% (bezogen auf die in der Dispersion vorhandenen Feststoffe) enthält.

7. Dispersionen nach Ansprüchen 1 bis 6, dadurch gekennzeichnet, daß sie Calciumcarbonat, Silicate, Siliciumdioxid, Glaskugeln, Aluminiumtitanat, Siliciumcarbid, Siliciumnitrid, sonstige Pulver für die Keramikherstellung, Zinkoxid, Titandioxid, Eisenoxide, organische Pigmente, Metalloxide, Metallpulver, Metallfasern, Aluminiumoxid, Al(OH)₃, Ruß, Graphit, Kohle, Gesteinsmehl, Molybdänsulfid und/oder Calciumsulfat enthalten,

8. Dispersionen nach Ansprüchen 1 bis 7, dadurch gekennzeichnet, daß sie 5 bis 95 Gew.-% Feststoffe enthalten.

9. Dispersionen nach Ansprüchen 1 bis 8, dadurch gekennzeichnet, daß sie weitere übliche Zusätze enthalten.

10. Verfahren zur Herstellung von wäßrigen Dispersionen von Füllstoffen und/oder Pigmenten, dadurch gekennzeichnet, daß man in den Kombinationen:
A + B + C + D oder
A + B + D oder
A + C + D oder
A + D
die Feststoffe zunächst mit
A) 40 bis 90 Gew.-% eines wasserlöslichen Polymers vordispergiert und danach
B) 0 bis 60 Gew.-% eines nichtionischen Alkylenoxidadduktes mit einem mittleren Molekulargewicht von 200 bis 100.000,
c) 0 bis 60 Gew.-% Verbindungen der Formeln (I), (II) und/oder (III) 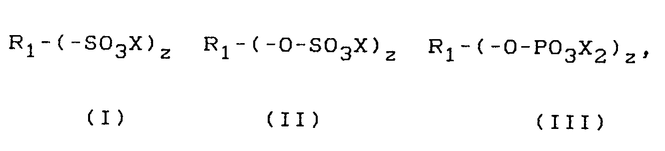 in denen
R₁ für einen gegebenenfalls substituierten aliphatischen, aromatischen oder araliphatischen Rest mit 1 bis 50 C-Atomen,
z jeweils unabhängig voneinander für eine ganze Zahl von 1 bis 10 und
X für Wasserstoff, ein einwertiges Metallion oder ein gegebenenfalls substituiertes Ammoniumion stehen und
D) 10 bis 60 Gew.-% einer Verbindung der Formel (IV) 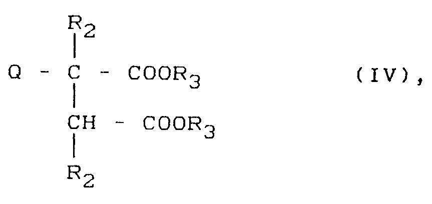 in der
Q für Wasserstoff, 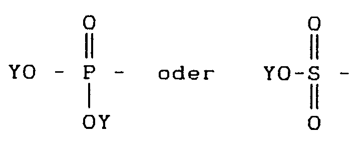 in der
Y jeweils unabhängig voneinander für Wasserstoff, ein einwertiges Metallion oder ein gegebenenfallssubstituiertes Ammoniumion,
R₂ jeweils unabhängig voneinander für Wasserstoff, einen gegebenenfalls substituierten Alkylrest mit 1 bis 12 C-Atomen oder für einen Rest des Typs -CH₂-COOR₃ oder -CH₂-CH₂-COOR₃ und
R₃ jeweils unabhängig voneinander für Wasserstoff, Y oder einen gegebenenfalls substituierten Alkylrest mit 1 bis 25 C-Atomen stehen,
wobei die Summe der jeweiligen Kombination 100 Gew.-% ergibt und gegebenenfalls weiteres Wasser zugibt.

## Claims

1. Aqueous dispersions of fillers and/or pigments, characterized in that they contain a dispersant combination of the following composition:
A + B + C + D or
A + B + D or
A + C + D or
A + D
in which
A) denotes 40 to 90 % by weight of a water-soluble polymer,
B) denotes 0 to 60 % by weight of a non-ionic alkylene oxide adduct having an average molecular weight of 200 to 100,000 kg/kmol,
C) denotes 0 to 60 % by weight of compounds of the formulae (I), (II) and/or (III) 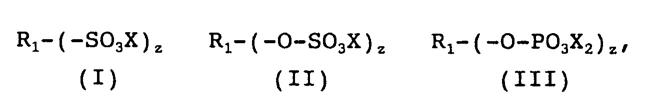 in which
R₁ represents an optionally substituted aliphatic, aromatic or araliphatic radical having 1 to 50 C atoms,
z in each case independently of one another represents an integer from 1 to 10 and
X represents hydrogen, a monovalent metal ion or an optionally substituted ammonium ion and
D) denotes 10 to 60 % by weight of a compound of the formula (IV) 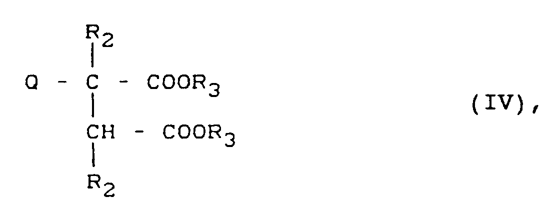 in which
Q represents hydrogen, 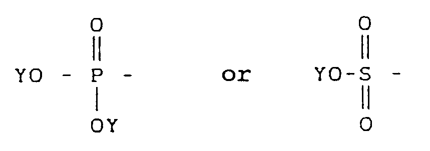
in which
Y in each case independently of one another represents hydrogen, a monovalent metal ion or an optionally substituted ammonium ion,
R₂ in each case independently of one another represents hydrogen, an optionally substituted alkyl radical having 1 to 12 C atoms or a radical of the type -CH₂-COOR₃ or -CH₂-CH₂-COOR₃ and
R₃ in each case independently of one another represents hydrogen, Y or an optionally substituted alkyl radical having 1 to 25 C atoms,
where the sum of the particular combination gives 100 % by weight.

2. Aqueous dispersions according to Claim 1, characterized in that component A) is homopolymers and copolymers of methacrylic and/or acrylic acid or their salts with molecular weights in the range from 800 to 40,000 kg/kmol.

3. Dispersions according to Claims 1 and 2, characterized in that component B) is reaction products of alkylene oxides having 2 to 40 C atoms with mono-, di- or polyfunctional, optionally substituted phenols, alcohols, thioalcohols or amines.

4. Dispersions according to Claims 1 to 3, characterized in that component B) is a compound of the formula (V) 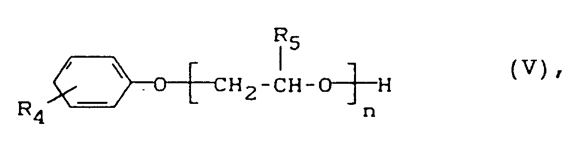 in which
R₄ denotes an optionally substituted aliphatic, aromatic or araliphatic radical having 1 to 40 carbon atoms,
R₅ denotes hydrogen, phenyl or an alkyl radical having 1 to 12 C atoms and
n denotes a number from 2 to 300.

5. Dispersions according to Claims 1 to 4, characterized in that component C) is aliphatic, aromatic or araliphatic, optionally substituted sulphonic acids or their salts or reaction products of thionyl chloride or phosphonyl chloride with alcohols.

6. Dispersions according to Claims 1 to 5, characterized in that the dispersion contains the dispersant combination in an amount from 0.02 to 10 % by weight (relative to the solids present in the dispersion).

7. Dispersions according to Claims 1 to 6, characterized in that they contain calcium carbonate, silicates, silica, glass beads, aluminium titanate, silicon carbide, silicon nitride, other powders for ceramic production, zinc oxide, titanium dioxide, iron oxides, organic pigments, metal oxides, metal powders, metal fibres, alumina, Al(OH)₃, carbon black, graphite, coal, ground minerals, molybdenum sulphide and/or calcium sulphate.

8. Dispersions according to Claims 1 to 7, characterized in that they contain 5 to 95 % by weight of solids.

9. Dispersions according to Claims 1 to 8, characterized in that they contain further customary additives.

10. Process for the preparation of aqueous dispersions of fillers and/or pigments, characterized in that in the combinations:
A + B + C + D or
A + B + D or
A + C + D or
A + D
the solids are first predispersed using
A) 40 to 90 % by weight of a water-soluble polymer and then
B) 0 to 60 % by weight of a non-ionic alkylene oxide adduct having an average molecular weight of 200 to 100,000,
C) 0 to 60 % by weight of compounds of the formulae (I), (II) and/or (III) 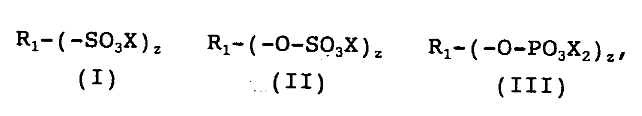 in which
R₁ represents an optionally substituted aliphatic, aromatic or araliphatic radical having 1 to 50 C atoms,
z in each case independently of one another represents an integer from 1 to 10 and
X represents hydrogen, a monovalent metal ion or an optionally substituted ammonium ion and
D) 0 to 60 % by weight of a compound of the formula (IV) 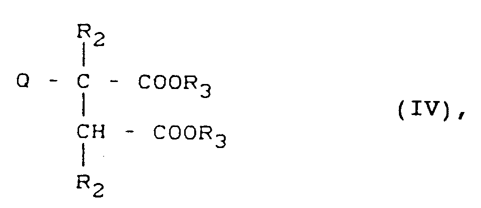 in which
Q represents hydrogen, 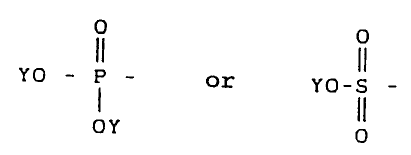
in which
Y in each case independently of one another represents hydrogen, a monovalent metal ion or an optionally substituted ammonium ion,
R₂ in each case independently of one another represents hydrogen, an optionally substituted alkyl radical having 1 to 12 C atoms or a radical of the type -CH₂-COOR₃ or -CH₂-CH₂-COOR₃ and
R₃ in each case independently of one another represents hydrogen, Y or an optionally substituted alkyl radical having 1 to 25 C atoms,
where the sum of the particular combination gives 100 % by weight and, if desired, further water are added.

## Revendications

1. Dispersions aqueuses de matières de charge et/ou de pigments caractérisées en ce qu'elles contiennent une combinaison d'agents dispersants à la composition suivante:
A + B + C + D ou bien
A + B + D ou bien
A + C + D ou bien
A+D
avec
A) 40 à 90 % en poids d'un polymère soluble dans l'eau,
B) 0 à 60 % en poids d'un adduct non ionique d'oxyde d'alkylène au poids moléculaire moyen de 200 à 100 000 kg/kmol,
C) 0 à 60 % en poids de composés de formules I, II et/ou III, 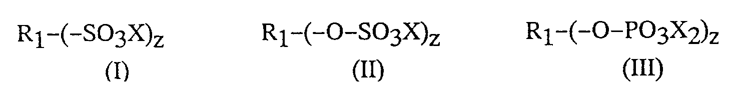 dans lesquelles
R₁ représente un radical aliphatique, aromatique ou araliphatique éventuellement substitué en C₁-C₅₀,
les symboles z représentent chacun, indépendamment l'un de l'autre, un nombre entier de 1 à 10 et
X représente l'hydrogène, un ion métallique monovalent ou un ion ammonium éventuellement substitué et
D) 10 à 60 % en poids d'un composé de formule IV 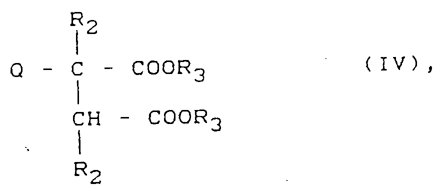 dans laquelle
Q représente l'hydrogène, 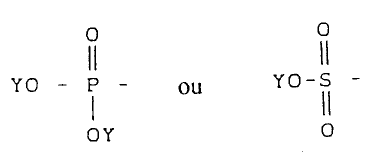
dans lesquels
les symboles Y représentent chacun, indépendamment l'un de l'autre, l'hydrogène, un ion métallique monovalent ou un ion ammonium éventuellement substitué,
les symboles R₂ représentent chacun, indépendamment l'un de l'autre, l'hydrogène, un groupe alkyle éventuellement substitué en C₁-C₁₂ ou un groupe du type -CH₂-COOR₃ ou -CH₂-OH₂-COOR₃ et
les symboles R₃ représentent chacun, indépendamment l'un de l'autre, l'hydrogene, Y ou un groupe alkyle éventuellement substitué en C₁-C₂₅,
la somme des composants de chaque combinaison représentant 100 % en poids.

2. Dispersions selon la revendication 1, caractérisées en ce que le composant A) consiste en homo- et copolymères de l'acide méthacrylique et/ou de l'acide acrylique ou leurs sels, à des poids moléculaires dans l'intervalle de 800 à 40 000 kg/kmol.

3. Dispersions selon les revendications 1 et 2, caractérisées en ce que le composant B) consiste en produits de réaction d'oxydes d'alkylène en C₂-C₄₀ avec des phénols, alcools, thioalcools ou amines mono-, di- ou poly-fonctionnels éventuellement substitués.

4. Dispersions selon les revendications 1 à 3, caractérisées en ce que le composant B) est un composé de formule V 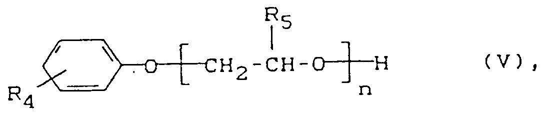 dans laquelle
R₄ représente un radical aliphatique, aromatique ou araliphatique éventuellement substitué en C₁-C₄₀,
R₅ représente l'hydrogène, un groupe phényle ou un groupe alkyle en C₁-C₁₂ et
n est un nombre allant de 2 à 300.

5. Dispersions selon les revendications 1 à 4, caractérisées en ce que le composant C) consiste en acide sulfoniques aliphatiques, aromatiques ou araliphatiques éventuellement substitués ou leurs sels ou en produits de réaction du chlorure de thionyle ou du chlorure de phosphonyle avec des alcools.

6. Dispersions selon les revendications 1 à 5, caractérisées en ce qu'elles contiennent la combinaison d'agents dispersants en quantité de 0,02 à 10 % en poids, par rapport aux matières solides présentes dans la dispersion.

7. Dispersions selon les revendications 1 à 6, caractérisées en ce qu'elles contiennent du carbonate de calcium, des silicates, de la silice, des billes de verre, du titanate d'aluminium, du carbure de silicium, du nitrure de silicium, d'autres poudres pour la fabrication de matières céramiques, de l'oxyde de zinc, du dioxyde de titane, des oxydes de fer, des pigments organiques, des oxydes métalliques, des poudres métalliques, des fibres métalliques, de l'alumine, Al(OH)₃, du noir de fumée, du graphite, du charbon, une farine minérale, du sulfure de molybdène et /ou du sulfate de calcium.

8. Dispersions selon les revendications 1 à 7, caractérisées en ce qu'elles contiennent de 5 à 95 % en poids de matières solides.

9. Dispersions selon les revendications 1 à 8, caractérisées en ce qu'elles contiennent d'autres additifs usuels.

10. Procédé de préparation de dispersions aqueuses de matières de charge et/ou de pigments, caractérisé en ce que, dans les combinaisons:
A + B + C + D ou bien
A + B + D ou bien
A + C + D ou bien
A + D
on soumet d'abord les matières solides à dispersion préalable avec
A) 40 à 90 % en poids d'un polymère soluble dans l'eau, puis on ajoute
B) 0 à 60 % en poids d'un adduct non ionique d'oxyde d'alkylène au poids moléculaire moyen de 200 à 100 000 kg/kmol,
C) 0 à 60 % en poids de composés de formules I, II et/ou III, 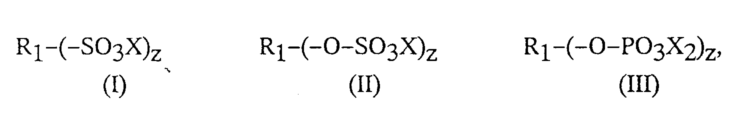 dans lesquelles
R₁ représente un radical aliphatique, aromatique ou araliphatique éventuellement substitué en C₁-C₅₀,
les symboles z représentent chacun, indépendamment l'un de l'autre, un nombre entier de 1 à 10 et
X représente l'hydrogène, un ion métallique monovalent ou un ion ammonium éventuellement substitué et
D) 10 à 60 % en poids d'un composé de formule IV 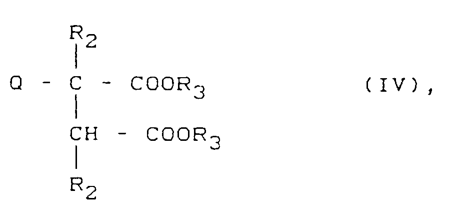 dans laquelle
Q représente l'hydrogène, 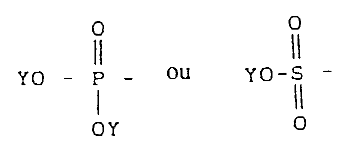
dans lesquels
les symboles Y représentent chacun, indépendamment l'un de l'autre, l'hydrogène, un ion métallique monovalent ou un ion ammonium éventuellement substitué,
les symboles R₂ représentent chacun, indépendamment l'un de l'autre, l'hydrogène, un groupe alkyle éventuellement substitué en C₁-C₁₂ ou un groupe du type -CH₂-COOR₃ ou -CH₂-OH₂-COOR₃ et
les symboles R₃ représentent chacun, indépendamment l'un de l'autre, l'hydrogène, Y ou un groupe alkyle éventuellement substitué en C₁-C₂₅,
la somme des composants de chaque combinaison représentant 100 % en poids, et le cas échéant des compléments d'eau.
